# EUROPEAN PATENT SPECIFICATION

(11) **EP 3 342 498 B1**
(45) Date of publication and mention of the grant of the patent: **22.07.2020**
(21) Application number: 17203209.6
(22) Date of filing: 23.11.2017
(51) Int. Cl.: B21D 22/02, B21D 35/00, B21D 53/88

(54) **METHOD FOR MANUFACTURING VEHICLE BODY PARTS**
VERFAHREN ZUR HERSTELLUNG VON KAROSSERIETEILEN
PROCÉDÉ DE FABRICATION DE PIÈCES DE CARROSSERIE D'UN VÉHICULE

(30) Priority: 09.12.2016 KR 20160167376
(43) Date of publication of application: 04.07.2018
(73) Proprietor: MS Autotech Co., Ltd., Gyeongju-si, Gyeongsangbuk-do 38198 (KR); MyungShin Industry Co., Ltd., Cheonbuk-myeon, Gyeongju-si, Gyeongsangbuk-do (KR)
(72) Inventor: Kim, Jang Soo, Gwacheon-si, Gyeonggi-do (KR); Cha, Hong Seag, Suwon-si, Gyeonggi-do 16334 (KR); Yang, Dae Ho, Suwon-si, Gyeonggi-do (KR); Choi, Mun Seok, Ulsan (KR); Eom, Won Ik, Uiwang-si, Gyeonggi-do (KR)
(74) Representative: Gulde & Partner

(56) References cited:
- DE-A1-102009 050 997
- US-A1- 2007 163 121
- US-A1- 2012 216 920
- US-A1- 2016 281 185

## Description

The present invention relates to a method for manufacturing collision-related vehicle body parts, and more particularly, to a method for manufacturing high-strength vehicle body parts by using hot stamping.

### BACKGROUND

Lightweight and high-strength body is a main issue in the automotive industry. The hot stamping technology was proposed by Norrbottens Jamverk AB in Sweden in the early 1970s. In GB Patent No. 1490535 issued to this company, the hot stamping technology is disclosed in detail.

To obtain a vehicle body part having tensile strength of 1 GPa or more by the hot stamping process, the microstructure of a steel blank has to be transformed from austenite to martensite by the quenching process in a press forming apparatus. For the hot stamping, boron steels are used which contains carbon of about 0.2 wt% and uses manganese (Mn) and boron (B) as elements for improving heat treatment performance.

In the hot stamping process, the blank is heated to an austenitization temperature or more, for example, up to 950°C, and then formed in a press forming apparatus, which provides excellent formability and reduces spring-back or delayed fracture, particularly in high-strength parts.

During the hot stamping process, however, surface oxidation of the blank occurs, and thus oxide scale on the surface of the hot-pressed body part needs to be removed through a descaling process. In order to remove the descaling process, Aluminum or Zinc coated steel sheets are disclosed in, for example, U.S. Patent No. 6296805.

In order to reduce the weights of vehicle parts, a tailor welded blank (TWB) technology has been applied in the automobile manufacturing field. However, the TWB technology cannot be applied to coated steel sheets for hot stamping, for example, aluminum (Al)-coated steel sheets. This is because an Al-coated layer causes a considerable strength reduction in a welded portion during laser welding. In order to solve this problem, U.S. Patent Publication No. 2015-0030382 discloses a method of performing laser welding after removing a portion of an Al-coated layer from a welded portion.

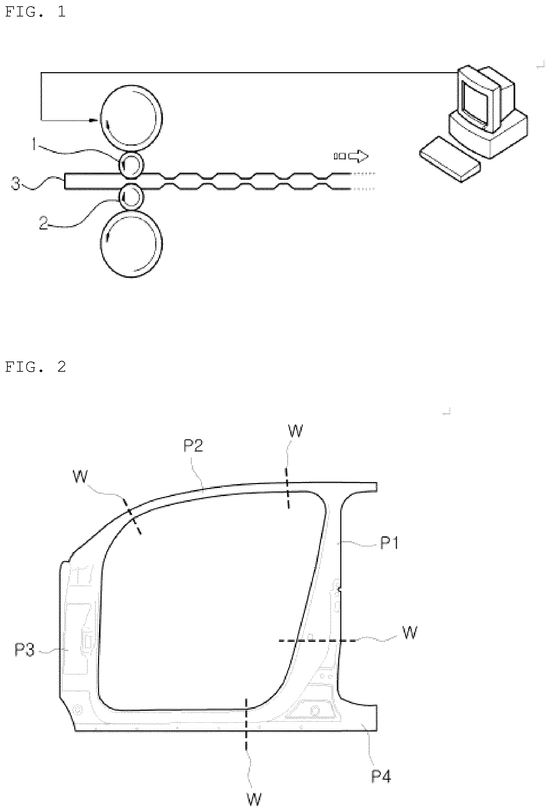

Another technology for reducing the weights of vehicle parts is a tailor rolled blank (TRB) technology. As illustrated in FIG. 1, the TRB technology is performed by controlling a thickness of a steel sheet by adjusting a gap between an upper roll 1 and a lower roll 2 during a process of rolling a steel coil 3. The thickness of blanks, by the TRB technology, only changes in one direction, that is, the rolling direction. In addition, since the tailor rolled blanks are uniformly manufactured by steelmakers, there are limitations in applying to the manufacture of various vehicle parts.

As the method for manufacturing body parts having two or more regions with different thicknesses, the TWB technology has been in a unique position. Due to this, other choices except for the TWB have not been considered. However, as described above, the TWB technology has difficulty in applying to a steel sheet for hot stamping which has a coated layer. So far, the conventional technologies have focused on solving this problem. One of them is a method disclosed in U.S. Patent Publication No. 2015-0030382. However, it is not easy for this method to actually apply to the production of vehicle parts.

The present invention also aims at manufacturing vehicle parts in which a plurality of parts P1 to P4 with different thicknesses or strengths as illustrated in FIG. 2 as one example are integrally formed all at once by hot stamping without seams W. Up to now, no technology has been proposed which manufactures body part as illustrated in FIG. 2 all at once by using a coated steel sheet for hot stamping.

A side panel illustrated in FIG. 2 may be manufactured by separately forming parts such as a center filler, a front filler, and the like and welding these parts to one another. The TWB technology may be considered for the manufacture of these body parts, but the TWB technology has difficulty in applying to a coated steel sheet for hot stamping, for example, an Al-coated steel sheet. Such body parts cannot be obtained by TRB having a thickness change only in one direction, that is, a rolling direction. The problems to be solved by the present invention are not necessarily limited to those described above, and other problems not described herein may be understood by the following description.

In relation to the present invention, Korean Patent Application No. 2015-0106952 entitled "HOT PRESSED STEEL PARTS FOR VEHICLE AND MANUFACTURING METHOD THEREFOR" has been proposed. This invention is characterized in that, before rolling a blank, the blank is preheated to oxidize a coated layer on a surface thereof in advance.

In the above invention, one of the reasons for forming the oxide layer on the surface of the blank before rolling is to prevent fine cracks from occurring on the surface of the blank during the rolling process. The inventors of the present application wanted to omit the preheating proposed in the above invention and have made efforts to reach the present invention.

DE 10 2009 050997 discloses a method having the features of the preamble of claim 1 of the present invention.

### SUMMARY

The present invention is based upon the recognition of the related art described above, and provides a novel method for manufacturing vehicle parts, which is capable of coping with increasingly diverse and enhanced collision performance requirement. In particular, the present invention provides a novel method for manufacturing vehicle parts having two or more regions with different thicknesses without TWB or TRB.

The inventors of the present application intend to provide a novel method for manufacturing vehicle body parts, which is completely different from the TWB method and is capable of replacing the TWB method.

An exemplary embodiment of the present invention provides a method for manufacturing vehicle body parts as defined claim 1.

Further embodiments of the invention are defined in the dependent claims.

According to the present invention, in the step a), the blank is rolled in two or more different directions. Rolling the blank for hot stamping is completely different from the concept of the TRB method. An object to be rolled by the TRB technology is a steel coil, not a blank trimmed into a predetermined shape and size for forming. Tailor rolled blanks are obtained by changing a thickness of a steel sheet in one direction through a roll gap adjustment while uncoiling or releasing a steel coil. However, in the present invention, a blank for press forming is rolled, and the blank is rolled in two or more different directions.

According to the present invention, the blank may not be preheated before rolling. The inventors of the present application found that a steel sheet for hot stamping, for example, an Al-coated steel sheet, did not cause fine cracks on the surface thereof when subjected to well-controlled cold rolling. In the process of heating the rolled blank to an austenitization temperature range for press forming, a coated layer is melted to alleviate the surface crack problem.

Excessive deformation of the blank due to cold rolling may be a problem, but this can be solved by forming a proper hole in the blank in accordance with the present invention. According to the present invention, it can be designed such that the blank to be rolled in the step a) is provided with a hole, and at least a portion of the hole is positioned in a region where the rolling is performed. The hole absorbs blank deformation that may occur in the process of rolling the blank.

According to the present invention, the blank to be rolled in the step a) includes a flange extending from an edge region of the blank corresponding to the position of the hole in a surface direction of the blank. The flange suppresses excessive thickness deviation from occurring in a preplanned predetermined rolling region due to the hole during the rolling of the blank. The flange may be trimmed in the step b).

### BRIEF DESCRIPTION OF THE DRAWINGS

Embodiments of the present invention will be more clearly understood from the following detailed description taken in conjunction with the accompanying drawings in which:
FIG. 1 is a schematic diagram for describing a conventional TRB process;
FIG. 2 is a diagram illustrating an example of vehicle body parts;
FIG. 3 is a flowchart of a process of manufacturing vehicle body parts according to an embodiment of the present invention;
FIGS. 4A to 4D are schematic diagrams for describing a blank rolling process according to an embodiment of the present invention;
FIG. 5 illustrates an example of a blank rolled in a lengthwise direction (LD) according to an embodiment of the present invention;
FIG. 6A illustrates a thickness distribution of the blank of FIG. 5 in a lengthwise direction (LD), and FIG. 6B illustrates a thickness distribution of the blank of FIG. 5 in a width direction;
FIG. 7 illustrates an example of a blank according to an embodiment of the present invention;
FIGS. 8A and 8B illustrate thickness distributions according to a rolling direction of the blank of FIG. 7; and
FIG. 9 is a flowchart of a process of manufacturing vehicle body parts according to another embodiment of the present invention.

### DETAILED DESCRIPTION OF THE EMBODIMENTS

Hereinafter, the present invention will be described in detail with reference to the accompanying drawings. Like reference numerals refer to like elements for convenience of description.

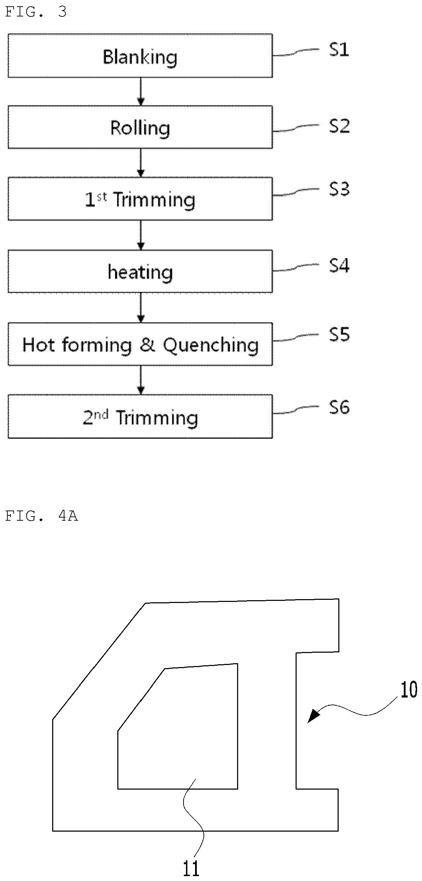

A method for manufacturing vehicle body parts according to an embodiment will be described with reference to FIGS. 3 to 4D.

As illustrated in FIG. 3, according to an embodiment, the body parts may be manufactured by blanking S1, rolling S2, primary trimming S3, heating S4, hot forming and cooling S5, and secondary trimming S6. As a material for forming a blank 10, an aluminum (Al)-coated steel sheet for hot stamping may be used. The Al layer of the steel sheet may includes Al or an Al alloys layer on the outside and an intermetallic layer on the inside.

### Blanking Process S1

As illustrated in FIG. 4A, the Al-coated steel sheet is cur or trimmed into the blank 10 having a preset size and shape for press forming. In designing a blanking line, amounts of extension of the blank 10 by rolling in step S2, safty margins of against failure in forming step S5, and the like may be considered.

In the blanking step S1, a hole 11 is formed in the blank 10. The hole 11 may be formed in a portion that is hardly exposed to the outside of the part after press forming, or may be formed in a portion that is to be removed from a product after press forming.

The hole 11 absorbs the deformation of the blank 10 that may be caused by rolling in step S1. The hole 11 is provided in a region where the rolling is performed, or is provided at a position that at least partially overlaps the region. Considering a rolling direction, a width, a thickness, or the like, the hole 11 may be formed at a position at which the rolling may increase the thickness of the blank 10 or cause the deformation of the blank 10, or may be formed at a position at which the thickness increase or the deformation of the blank 10 can be effectively prevented.

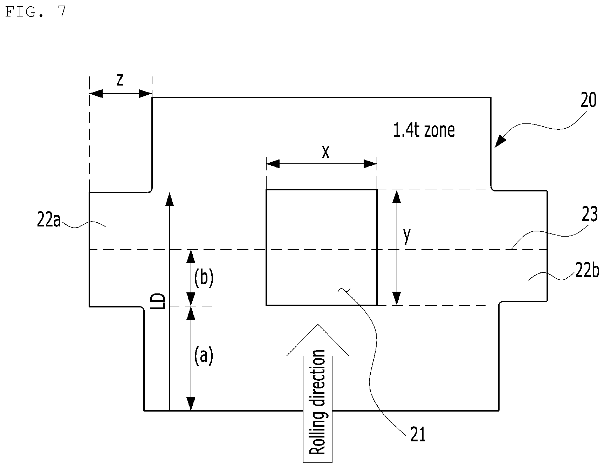

Referring to FIG. 7, a blank 20 may include flanges 22 (22a, 22b) extending from an edge region corresponding to a position of a hole 21 in a surface direction. The flanges 22 are intended to eliminate the thickness deviation that may occur in a rolling region having the same thickness target, and details thereof will be described below.

### Rolling Process S2

A rolling process S2 is a process of rolling a partial region of the blank 10 so that a thickness difference occurs between a rolled region and a non-rolled region. Such rolling may be sequentially performed on a plurality of partial regions that are not exactly same to each other. If the thickness of the blank 10 before the rolling process S2 is equal throughout the blank 10, the non-rolled region after the rolling process S2 may become the thickest region of the blank 10. The rolling process S2 is designed in consideration of these points, and it is unnecessary to roll over the entire area of the blank 20 in the rolling steps of S2.

As illustrated in FIGS. 4A to 4D, in the rolling process S2, the blank 10 is rolled so as to have at least two regions with different thicknesses. In a TRB process, a steel coil is rolled only in one direction with respect to the entire surface of the steel sheet. Therefore, tailor rolled blanks have a thickness change only in a rolling direction. According to an embodiment, the blank 10 is rolled in two or more different directions. Thus, two or more regions with different thicknesses are arranged in different directions rather than in one direction.

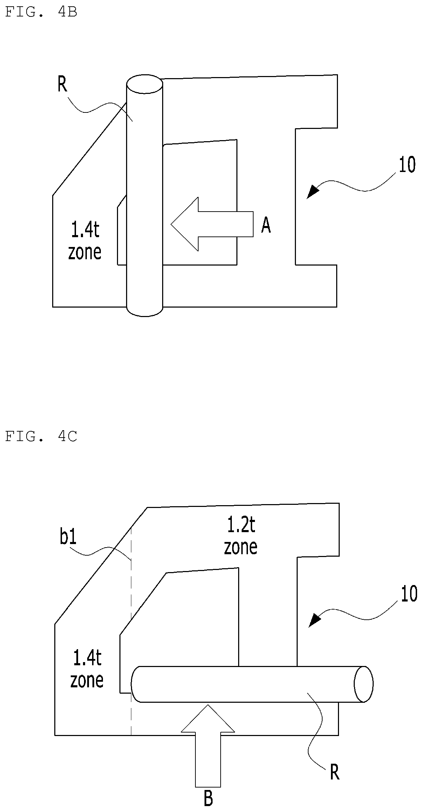

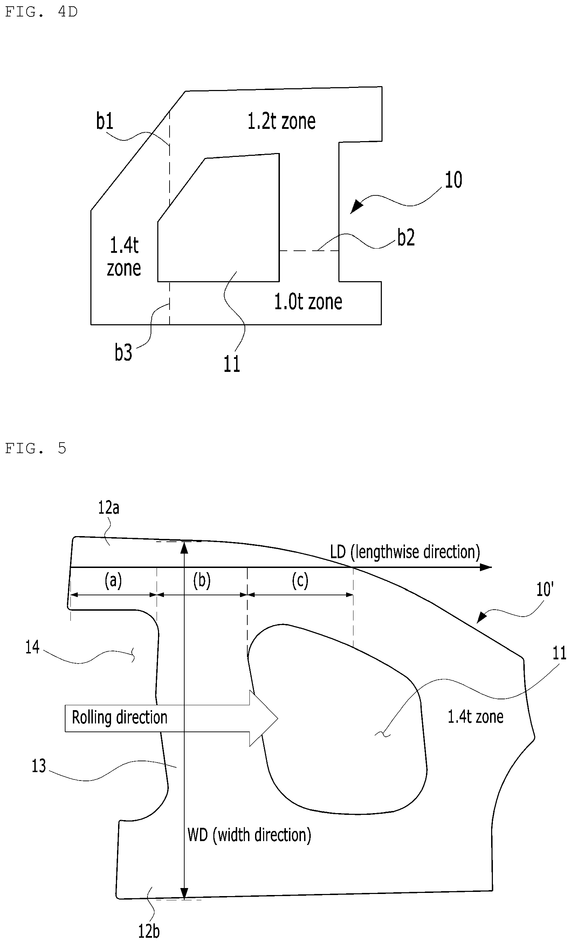

An example of rolling the blank 10 having a thickness of 1.4 mm will be described with reference to FIGS. 4B to 4D. Referring FIG. 4B, the blank 10 is rolled by a rolling roll R in the direction indicated as A. The rolling in the A direction may be performed once or more times until the thickness of the region rolled in the A direction is reduced to 1.2 mm. As illustrated in FIGS. 4C and 4D, the blank 10 rolled in the A direction is rolled in a B direction that is different from the A direction. The rolling in the B direction may be performed once or more times until the thickness of the region rolled in the B direction is reduced to 1.0 mm.

In FIG. 4C, b1 represents a boundary between a region having a thickness of 1.4 mm and a region having a thickness of 1.2 mm in the blank 10. In FIG. 4D, b2 represents a boundary between a region having a thickness of 1.2 mm and a region having a thickness of 1.0 mm in the blank 10, and b3 represents a boundary between a region having a thickness of 1.4 mm and a region having a thickness of 1.0 mm in the blank 10.

As illustrated in FIG. 4D, it is possible to obtain the blank 10 having three regions having different thicknesses through the above-described rolling. The change of the rolling direction from the A direction to the B direction may be made by, for example, changing the direction of the blank 10 entering the rolling roll R. The hole 11 may be disposed in a region in which the different rolling directions A and B overlap each other.

The rolling in step S2 is performed inward from the edge of the blank 10. It is desirable that the rolling on the partial region of the blank is completed at once, even though this will not be quite easy, since the rolling may cause surface hardening of the blank 10. The rolling load has to be increased as the rolling is repeated on a same region and this may give damage to the coated layer. In order to reduce the number of repetition of rolling, it is necessary to appropriately adjust a roll gap or the like.

The rolling roll R may have sections with different diameters in a lengthwise direction. If such a rolling roll R is used, regions having different thicknesses in a width direction, that is, a direction perpendicular to the rolling direction, may be formed by rolling the blank 10 in one direction.

### Primary Trimming Process S3

The rolled blank 10 is trimmed along an outline in a shape necessary for hot forming. It is desirable to trim the blank 10 in a shape closest to a product of the hot forming. The trimming may be performed by using a laser. In step S3, the above-mentioned flanges 22 are trimmed.

### Heating Process S4

For hot stamping, the blank 10 is heated to above an austenitization temperature. For example, the Al-coated steel sheet is heated to about 550°C to form an oxide layer on a surface thereof, and is then heated to about 950°C. Heating by direct energization, high-frequency induction heating, electric furnace, and the like may be used alone or in combination.

On the other hand, the deformation of the blank 10 may be suppressed by the hole 11 and the appropriate rolling control, but the blank 10 may be deformed to some extent during the rolling step S2. Therefore, a levelling process for planarizing the blank 10 may be performed between the rolling process S2 and the heating process S4. A conventional levelling process using multiple rollers may be performed.

### Hot Forming and Cooling Process S5

This process is a process of press-forming and simultaneously quenching the austenitized blank 10 into a product having a desired shape. It is possible to obtain high-strength body parts having martensite through the quenching.

### Secondary Trimming Process S6

After the hot press forming, a trimming process for removing extra portions from the product may be performed on the edge of the formed product. It is preferable to omit a secondary trimming process so as to prevent the waste of the blank 10 and improve the production efficiency of the blank 10, but the trimming after the press forming is still required.

A change in a thickness of a blank according to the rolling will be described with reference to FIGS. 5 to 6B.

A blank 10' illustrated in FIG. 5 is blanked in a similar shape for a manufacturing test of a door side panel. The blank 10' includes parts constituting the side panel, such as a front filler and a center filler. A hole 11 is formed at the central portion of the blank 10' so as to prevent the deformation of the blank 10' and absorb the deformation of the blank 10' at the time of the rolling.

An extension portion 12a on a roof rail side and an extension portion 12b on a side sill side protrude from the rear of the blank 10', and a cut-out portion 14 is defined by the extension portions 12a and 12b and the center filler portion 14. The cut-out portion 14 is not provided for the purpose of deformation absorption. However, the hole may be intentionally formed in such a portion according to the design of the shape of the blank 10', the rolling region, or the like.

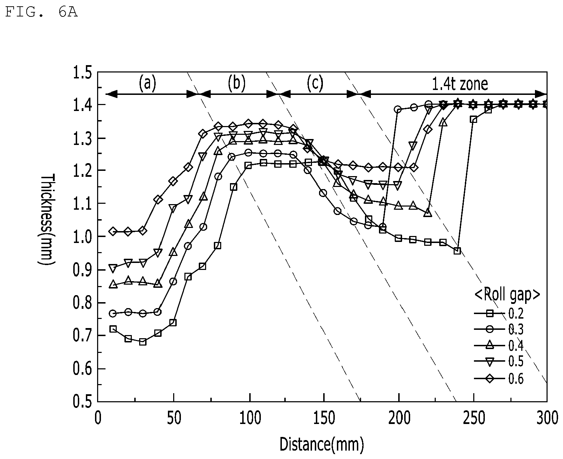

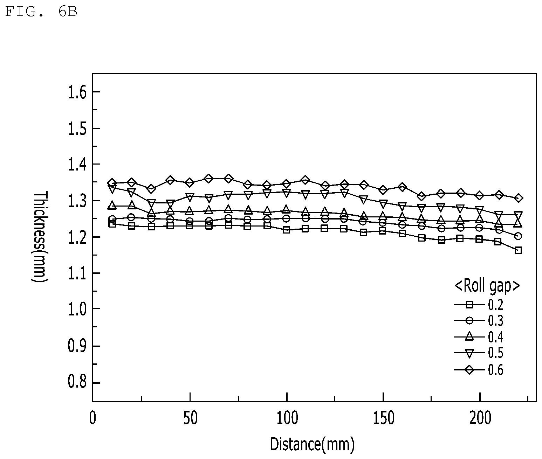

FIGS. 6A and 6B are graphs showing a thickness distribution of the blank 10' obtained by rolling the blank 10' of FIG. 5 in a right direction, that is, a lengthwise direction LD of the blank 10'. A thickness of the blank 10' before rolling was 1.4 mm, and a target thickness after rolling was 1.2 mm. The rolling was performed in a right direction from a left end of the blank 10', and a roll gap was changed in the range of 0.2 mm to 0.6 mm.

FIG. 6A shows the thickness distribution in the lengthwise direction LD of the blank 10'. In FIG. 6A, a horizontal axis represents a distance in the lengthwise direction LD.

Referring to FIGS. 5 and 6A, in the case of a section (a) where the cut-out portion 14 is present or a section (c) where the hole 11 is formed, the thickness of the blank 10' shows a significant deviation from the target thickness of 1.2 mm. In the section (a), the maximum thickness deviation of about 0.5 mm occurs. In the section (b) corresponding to the center filler portion 13, the thickness of the blank 10' is close to the target thickness of 1.2 mm and shows a small deviation of about 0.1 mm. Although there is a difference according to a roll gap condition or the like, the above phenomenon tends to occur.

The thickness deviation in the lengthwise direction LD of the blank 10' indicates that it is necessary to take measures to solve the thickness deviation when the hole 11 is formed in the blank 10' so as to absorb the deformation of the blank 10'. In addition, the above results need to be necessarily considered in designing the shape, the rolling direction, or the rolling region of the blank 10'.

FIG. 6B shows the thickness distribution in the width direction WD of the blank 10'. In FIG. 6B, a horizontal axis represents a distance in the width direction WD.

Referring to FIGS. 5 and 6B, there is a deviation according to a roll gap, but a thickness after rolling was close to 1.2 mm, and a maximum deviation was about 0.1 to about 0.15. It can be seen that, as the roll gap is smaller, the result close to the target thickness can be obtained.

FIG. 7 illustrates a shape design of an improved blank to which the above result has been reflected.

As illustrated in FIG. 7, the blank 21 is formed in the central portion of the blank 20, and the flanges 22 (22a, 22b) extend in a surface direction from the edge region of the blank 20 corresponding to the hole 21. The flanges 22 compensate for the area of the hole 21 and suppresses the thickness deviation in the rolling region of the blank 20. The deviation may be caused by the hole 21 during the rolling process, since the hole is not in touch with the rolling roll R and can not widstand the load from the rolling roll R.

In designing the shape of the flanges 22, it is necessary to consider the area or position of the flanges 22 relative to the hole 21. It is preferable that the flanges 22 has a size approximately equal to that of the hole 21 corresponding thereto. However, since the flanges 22 will be removed in the trimming process S6, the flanges 22 should be properly formed in a minimum size so as to reduce the waste of the material.

Referring to FIG. 7, the flanges 22a and 22b may be formed at left and right ends of the blank 20 each by 1/2 of the area of the hole 21 so as to have the same area as that of the hole 21. When the rolling direction is an upward direction and the hole 21 has an area of xy, a protrusion length z of each flange 22 may be 1/2x and a length of each flange 22 in the rolling direction may be 1/2y. The shapes or positions of the flanges 22a and 22b are designed to compensate for the area of the hole 21, where the blank 20 is removed, when rolling the blank 20 with the rolling roll R. The line denoted by 23 in FIG. 7 is the lengthwise direction of the rolling roll R.

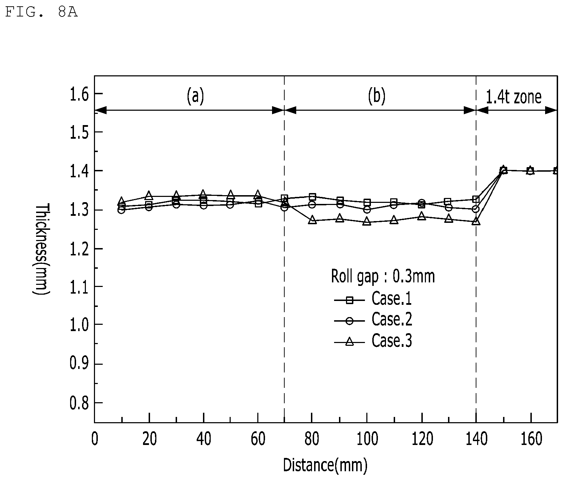

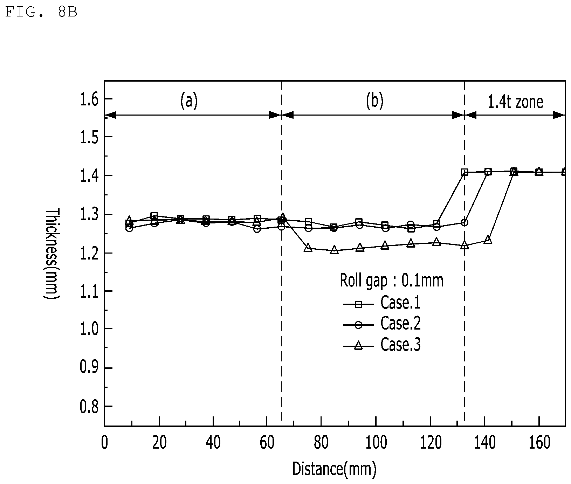

FIGS. 8A and 8B are graphs showing a thickness change according to a rolling direction, that is, a lengthwise direction LD of the blank 20, after the blank 20 having the shape shown in FIG. 7 is rolled. The blank 20 has a thickness of 1.4 mm, and a target rolling thickness thereof is 1.2 mm. FIG. 8A is a graph showing a thickness distribution when a roll gap is 0.3 mm, and FIG. 8B is a graph showing a thickness distribution when a roll gap is 0.1 mm. In FIGS. 8A and 8B, a horizontal axis represents a distance in a lengthwise direction LD.

In FIGS. 8A and 8B, cases 1 to 5 are examples in which the sizes of the flanges 22 relative to the hole 21 are slightly different. Cases 1 and 2 are examples in which the area of the hole 21 is equal to the area of the flanges 22 corresponding thereto (z = 1/2x). However, the hole size (that is, the flange area) in case 2 is larger than the hole size (that is, the flange area) in case 1. Case 3 is an example in which the area of the flanges 22 is smaller than the area of the hole 21 (z < 1/2x).

As illustrated in FIGS. 8A and 8B, a thickness deviation in the section (a) and the section (b) was smaller in cases 1 and 2 where the size of the flanges 22 is equal to the size of the hole 21 than in case 3 where the size of the flanges 22 is smaller than the size of the hole 21.

As can be seen from the embodiments described above, when the shape of the blank is designed in the blanking step S1, the holes 11 and 21 need to be provided for deformation absorption according to the rolling, and the flanges 22 need to be provided at the blank edge region corresponding to the positions of the holes 11 and 21. The flanges 22 are formed in a direction perpendicular to the rolling direction or in a lengthwise direction 23 of the rolling roll.

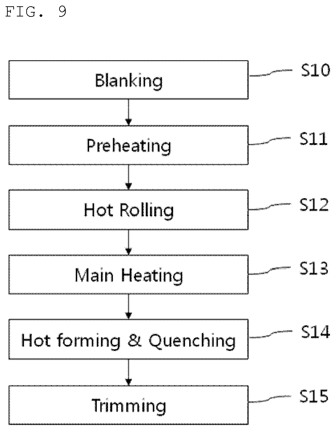

FIG. 9 illustrates a process of manufacturing body parts according to another embodiment. After preheating S11, hot rolling S12 is performed on a blank. Processes other than these processes may be performed equally or similarly to the above-mentioned embodiments.

The preheating S11 is a process of oxidizing a coated layer on the surface of the blank. The preheating s11 oxidizes an Al-coated steel sheet for hot stamping, for example, an Al-coated layer on the surface of the steel sheet. If the dense aluminum oxide is previously formed on the surface of the blank in the preheating S11, it is possible to prevent fine cracks from occurring on the surface of the blank during the hot rolling S12.

In the case of the Al-coated steel sheet for hot stamping, a target temperature of the preheating S11 is about 580°C. Since the Al-coated layer is melted at 650°C to 700°C, a heating rate of main heating S13 is limited. However, if a stable oxide layer is formed on the surface of the blank through the preheating S11, it is possible to rapidly heat the blank to an austenitization temperature, for example, 950°C.

After the preheating S11, hot rolling S12 is performed on the blank. The hot rolling has to be performed on a plurality of regions of the blank, and the temperature of the blank is lowered during the hot rolling. It may be necessary to reheat the blank so as to compensate for the lowered temperature of the blank.

According to the present invention, vehicle parts having a plurality of regions with different thicknesses can be manufactured through cold rolling without a separate preheating.

In addition, according to the present invention, vehicle parts having two or more regions with different thicknesses can be freely manufactured by using a conventionally provided coated steel sheet.

In addition, according to the present invention, body parts in which a plurality of parts P1 to P4 with different thicknesses as illustrated in FIG. 2 are integrally formed can be manufactured all at once by using a single blank.

Furthermore, according to the present invention, parts can be freely designed and manufactured, thereby coping with the demand for various collision performance.

Moreover, according to the present invention, it is possible to prevent the occurrence of the deviation in the thickness of the blank from a target thickness in any rolling region.

While specific embodiments of the present invention have been illustrated and described, it will be understood by those skilled in the art that changes may be made to those embodiments without departing from the scope of the invention that is defined by the following claims.

## Claims

1. A method for manufacturing vehicle body parts, the method comprising:
a) rolling a blank (10) including a coated layer, such that the blank (10) has two or more regions with different thicknesses,
**characterized in that** the method further comprises;
b) trimming the rolled blank (10) into a shape necessary for press forming; and
c) performing hot press forming by heating the trimmed blank (10) and cooling the heated blank (10) in a press forming apparatus, and
the blank (10) to be rolled in the step a) is provided with a hole (11), and at least a portion of the hole (11) is positioned in a region where the rolling is performed.

2. The method of claim 1, further comprising, before the step a), preheating the blank (10) for oxidation of coated layer on the surface of the blank (10).

3. The method of claim 1, wherein the rolling in the step a) is sequentially performed on a plurality of partial regions that are not exactly same to each other.

4. The method of claim 1, wherein, in the step a), the blank (10) is rolled in two or more different directions.

5. The method of claim 1, wherein the blank (10) to be rolled in the step a) includes a flange (22a, 22b) extending in a surface direction from an edge region of the blank corresponding to a position of the hole (11), so as to compensate at least partially for the area of the hole (11), and
the flange (22a, 22b) is trimmed in the step b).

6. The method of claim 5, wherein, in the step a), the blank (10) is rolled in two or more different directions.

## Patentansprüche

1. Verfahren zur Herstellung von Karosserieteilen, wobei das Verfahren Folgendes umfasst:
a) Walzen eines Rohlings (10), der eine beschichtete Schicht umfasst, so dass der Rohling (10) zwei oder mehr Bereiche mit unterschiedlichen Dicken aufweist,
**dadurch gekennzeichnet, dass** das Verfahren ferner Folgendes umfasst:
b) Beschneiden des gewalzten Rohlings (10) auf eine zum Pressformen notwendige Form und
c) Vornehmen eines Heißpressformens durch Erhitzen des zugeschnittenen Rohlings (10) und Abkühlen des erhitzten Rohlings (10) in einer Pressformvorrichtung, und
wobei der in Schritt a) zu walzende Rohling (10) mit einem Loch (11) versehen ist und zumindest ein Abschnitt des Lochs (11) in einem Bereich angeordnet ist, in dem das Walzen erfolgt.

2. Verfahren nach Anspruch 1, das ferner vor dem Schritt a) ein Vorwärmen des Rohlings (10) zur Oxidation der beschichteten Schicht auf der Oberfläche des Rohlings (10) umfasst.

3. Verfahren nach Anspruch 1, wobei das Walzen in Schritt a) nacheinander auf einer Mehrzahl von Teilbereichen erfolgt, die einander nicht genau gleichen.

4. Verfahren nach Anspruch 1, wobei in Schritt a) der Rohling (10) in zwei oder mehr unterschiedlichen Richtungen gewalzt wird.

5. Verfahren nach Anspruch 1, wobei der in Schritt a) zu walzende Rohling einen Flansch (22a, 22b) umfasst, der sich in einer Oberflächenrichtung von einem Randbereich des Rohlings aus erstreckt, der einer Position des Lochs (11) entspricht, um die Fläche des Lochs (11) zumindest teilweise zu kompensieren, und
der Flansch (22a, 22b) in Schritt b) beschnitten wird.

6. Verfahren nach Anspruch 5, wobei in Schritt a) der Rohling (10) in zwei oder mehr unterschiedlichen Richtungen gewalzt wird.

## Revendications

1. Procédé de fabrication de pièces de carrosserie de véhicule, le procédé comprenant :
a) laminer une ébauche (10) comprenant une couche revêtue, de telle sorte que l'ébauche (10) a deux ou plusieurs régions avec différentes épaisseurs,
**caractérisé en ce que** le procédé comprend en outre :
b) tailler l'ébauche laminée (10) en une forme nécessaire au formage sous pression ; et
c) effectuer un formage sous pression à chaud en chauffant l'ébauche (10) taillée et en refroidissant l'ébauche (10) chauffée dans un appareil de formage sous pression, et
l'ébauche (10) devant être laminée à l'étape a) étant munie d'un orifice (11), et au moins une partie de l'orifice (11) est positionnée dans une région où le laminage est effectué.

2. Procédé selon la revendication 1, comprenant en outre, avant l'étape a), préchauffer l'ébauche (10) pour l'oxydation de la couche revêtue sur la surface de l'ébauche (10).

3. Procédé selon la revendication 1, le laminage à l'étape a) étant effectué de façon séquentielle sur une pluralité de régions partielles qui ne sont pas exactement identiques les unes aux autres.

4. Procédé selon la revendication 1, l'ébauche (10) étant laminée dans deux ou plusieurs directions à l'étape a).

5. Procédé selon la revendication 1, l'ébauche (10) devant être laminée à l'étape a) comprenant une bride (22a, 22b) s'étendant dans une direction de surface à partir d'une région de bord de l'ébauche correspondant à une position de l'orifice (11), afin de compenser au moins partiellement la zone de l'orifice (11), et
la bride (22a, 22b) étant taillée à l'étape b).

6. Procédé selon la revendication 5, l'ébauche (10) étant laminée dans deux ou plusieurs directions à l'étape a).
